# EUROPÄISCHE PATENTANMELDUNG

(11) **EP 2 481 717 A2**
(43) Veröffentlichungstag der Anmeldung: **01.08.2012**
(21) Anmeldenummer: 12153308.7
(22) Anmeldetag: 31.01.2012
(51) Int. Cl.: C03C 27/04

(54) **Glas-Titan-Dichtung und Verfahren zur Herstellung einer Glas-Titan-Dichtung**

(30) Priorität: 31.01.2011 DE 102011003397
(71) Anmelder: IL Metronic Sensortechnik GmbH, 98693 Ilmenau-Unterpörlitz (DE)
(72) Erfinder: KIRCHHOFF, Rolf, 98693 Ilmenau (DE); ALTSTADT, Erhard, 98693 Ilmenau (DE); DEMNY, Birgitta, 98693 Ilmenau (DE)
(74) Vertreter: Liedtke, Markus

(57) **Zusammenfassung**

Die Erfindung betrifft eine Glas-Titan-Dichtung und ein Verfahren zur Herstellung einer Glas-Titan-Dichtung.

Die Aufgabe des Verfahrens wird erfindungsgemäß mit einer Anordnung, welche zwischen dem Glaskörper (3) und dem Druckring (2) sowie zwischen dem Innenteil (4) und dem Glaskörper (3) jeweils eine Verbindungsschicht (2.1, 4.1) aus Nickel angebracht ist, und mit einem Verfahren, bei dem zumindest auf einem Teilbereich der Oberfläche des Druckrings (2) und/oder auf der Oberfläche des Innenteils (4) eine Verbindungsschicht (2.1, 4.1) aus Nickel aufgebracht wird und danach der Glaskörper (3) mit dem Druckring (2) und/oder dem Innenteil (4) durch Einschmelzen verbunden wird, gelöst.

## Beschreibung

Die Erfindung betrifft eine Glas-Titan-Dichtung mit einem Glaskörper, der außen mit einem Druckring und innen mit zumindest einem Innenteil stoffschlüssig verbunden ist.

Die Erfindung betrifft weiterhin ein Verfahren zur Herstellung einer Glas-Titan-Dichtung, wobei ein Glaskörper an seiner Außenseite mit einem Druckring und an seiner Innenseite mit zumindest einem Innenteil stoffschlüssig verbunden wird.

Zum Schutz empfindlicher Bauteile vor eindringenden Schadstoffen oder zu deren Betrieb in konditionierter Atmosphäre werden Glasdurchführungen verwendet. Hauptanwendungsgebiete von Glasdurchführungen sind Prozessmess-und Sensortechnik, Automatisierungstechnik, Automobil-, Luft- und Raumfahrttechnik, Medizintechnik und Unterwasseranwendungen.

Für hohe mechanische und chemische Beanspruchungen sowie für Anwendungen, die eine hohe Korrosionsbeständigkeit und gute Bioverträglichkeit erfordern, werden Glasdurchführungen mit Titan oder Titanlegierungen verwendet.

Zur hermetischen Abdichtung von elektronischen Komponenten und elektronischen Systemen sind Glasdurchführungen bekannt, welche aus einem äußeren Metallteil bestehen, in welches ein vorgeformter Glaskörper aus massiven oder gesintertem Einschmelzglas oder Glaslot dicht eingeschmolzen ist. Das äußere Metallteil ist eine Buchse, Platine oder ein Gehäusebestandteil. Im Glasteil sind elektrische Innenleiter einzeln oder in Gruppen ebenfalls dicht eingeschmolzen. Als Innenleiter werden im Allgemeinen Stifte oder Röhrchen verwendet.

Neben Anwendungen derartiger Glasdurchführungen, bei denen die chemische Beständigkeit und hohe hydraulische Drücke vorliegen, treten bei Anwendungen in der Invasiv-Medizin, insbesondere bei der minimal-invasiven Chirurgie, zudem höchste Anforderungen an die Miniaturisierung der optoelektronischen und mechanischen Systeme hinzu.

Im Stand der Technik sind für Glasdurchführungen, im Folgenden auch als Glas-Titan-Dichtungen bezeichnet, verschiedene Ausführungen bekannt.

Ein besonderer Aspekt der Einglasungstechnologie ist dabei auf die Grenzflächen zwischen Glas und Metall gerichtet. Zur Erzeugung einer dichten Verbindung zwischen dem Glas und dem Metall werden diese miteinander verschmolzen. Dabei müssen vor und während des Einschmelzens die Bindungskräfte sichergestellt werden, die neben einer mechanischen Verspannung des Glasbauteils mit dem Metallbauteil die hermetische Dichtheit und Belastbarkeit der Glas-Metallverbindung sicherstellt. Der technologische Spielraum dafür ist werkstoffabhängig.

Als Metall eignen sich aufgrund einer hohen chemischen Beständigkeit, hohen Korrosionsbeständigkeit, Festigkeit bei geringer Dichte sowie einer hervorragenden Biokompatibilität für viele Anwendungen in spezifischen Umgebungsbedingungen Titan und Titanlegierungen. Anwendung finden Titan und Titanlegierungen in mit Körperflüssigkeiten des Menschen in Berührung kommenden medizintechnischen Metallteilen an Geräten, Instrumenten und Implantaten.

Die hohe Beständigkeit gegenüber Korrosion und aggressiven Umgebungsbedingungen resultiert aus der Ausprägung einer hochbeständigen

Oxidschicht an der Metalloberfläche des Titan und der Titanlegierungen unter atmosphärischen Normalbedingungen.

Zur Herstellung einer Glas-Titan-Dichtung ist aus der DE 44 03 028 C 2 ein Verfahren bekannt, bei dem auf der Oberfläche eines Gegenstandes aus Titan eine Schicht aus einer Titannitridverbindung ausgebildet ist, mit der das Glas durch Schmelzen dicht verbunden werden kann. Nachteilig hierbei ist jedoch ein hoher Aufwand bei der Prozesssteuerung für die Titan-Nitrid-Bildung und der Einschmelzung, insbesondere bei unterschiedlichen Titangeometrien. Der hohe Aufwand resultiert daraus, dass eine zielgerichtete Dosierung der Nitrierung und deren Aufrechterhaltung im Einschmelzprozess nur mit aufwendigen, kostenintensiven Mitteln realisierbar ist und eine Überdosierung der Nitrierung eine vakuumdichte Adhäsion des Glases verhindert.

Der Erfindung liegt die Aufgabe zugrunde, eine Glas-Titan-Dichtung und ein Verfahren zu ihrer Herstellung anzugeben, mit denen eine rationelle hermetische Abdichtung von Baugruppen ermöglicht wird, welche für hohe mechanische und chemische Beanspruchungen ausgelegt ist und miniaturisierte Ausführungen ermöglicht.

Hinsichtlich der Glas-Titan-Dichtung wird Aufgabe erfindungsgemäß durch die im Anspruch 1 angegebenen Merkmale und hinsichtlich des Verfahrens durch im Anspruch 3 angegebenen Merkmale gelöst.

Vorteilhafte Ausgestaltungen der Erfindung sind Gegenstand der Unteransprüche.

Die Glas-Titan-Dichtung umfasst einen Glaskörper, der außen mit einem Druckring und innen mit zumindest einem Innenteil stoffschlüssig verbunden ist. Erfindungsgemäß besteht zumindest der Druckring aus Titan oder einer Titanlegierung und zwischen dem Glaskörper und dem Druckring sowie zwischen dem Innenteil und dem Glaskörper ist jeweils eine Verbindungsschicht aus Nickel angebracht.

Die für die hohe Beständigkeit gegenüber Korrosion und aggressiven Umgebungsbedingungen verantwortliche hochbeständige Oxidschicht an der Metalloberfläche des Titan und der Titanlegierungen unter atmosphärischen Normalbedingungen erschwert die Herstellung einer gasdichten Titan-Glasverschmelzung, so dass Titan-Glasdurchführungen nur mit technisch sehr hohem Aufwand realisierbar sind. Die Verbindungsschicht aus Nickel ist jedoch in einfacher Weise und mit geringem Aufwand sowohl auf den Glaskörper als auch auf den Druckring und das Innenteil aufbringbar. Zwischen dem Glas und Nickel und zwischen Titan und Nickel bildet sich eine fluiddichte Verbindung aus. Durch das anschließende Aufschmelzen ist somit auch eine fluiddichte sowie mechanisch und chemisch stabile Verbindung zwischen dem Glaskörper und dem Druckring sowie dem Glaskörper und dem Innenteil erzeugbar.

Gemäß einer vorteilhaften Weiterbildung der Glas-Titan-Dichtung besteht das Innenteil und/oder der Druckring aus der Titan-Aluminium-Legierung Ti 6AL 4V. Diese Titan-Aluminium-Legierung Ti 6AL 4V zeichnet sich durch eine besonders hohe Beständigkeit gegen Umwelteinflüsse, insbesondere auch gegen Salzwasser, ein sehr gute Bearbeitbarkeit und eine ausgezeichnete Biokompabilität aus. Aufgrund der hohen Beständigkeit gegen Salzwasser ist insbesondere auch eine Anwendung der Glas-Titan-Dichtung für Unteranwendungen möglich.

Zur Herstellung der Glas-Titan-Dichtung wird ein Glaskörper an seiner Außenseite mit einem Druckring und an seiner Innenseite mit zumindest einem Innenteil stoffschlüssig verbunden, wobei zumindest der Druckring aus Titan oder einer Titanlegierung besteht und wobei zumindest auf einem Teilbereich der Oberfläche des Druckrings und/oder auf der Oberfläche des Innenteils eine Verbindungsschicht aus Nickel aufgebracht und danach der Glaskörper mit dem Druckring und dem Innenteil durch Einschmelzen verbunden wird. Dabei werden an den Grenzflächen zwischen Glas und Metall gerichtet die erforderlichen Bindungskräfte erzeugt, die neben der erforderlichen mechanischen Verspannung die hermetische Dichtheit und Belastbarkeit einer Glas-Metallverbindung sicherstellen.

Eine vorteilhafte Ausführung sieht vor, dass das Aufbringen der Verbindungsschicht auf die Teilbereiche des Druckrings und/oder des Innenteils galvanisch durchgeführt wird.

In einer weiteren vorteilhaften Ausgestaltung des erfindungsgemäßen Verfahrens werden folgende Verfahrensschritte ausgeführt werden:
- Herstellung einer Sinterglas-Preform als Montageelement aus Einschmelzglas oder Glaslot,
- Präparation des Druckrings (2) und/oder des Innenteils (4) durch
   a) Reinigung und Oberflächenaktivierung,
   b) Partielle Beschichtung an den Einglasungsstellen,
   c) Tempern zur Schichtdiffusion,
- Montage des Druckrings (2) und des Innenteils (4) in die Graphit-Einschmelzform,
- Einglasen im Mehrzonen-Banddurchlaufofen oder Chargenofen unter Schutzgas bei Einhaltung eines definierten und reproduzierbaren Temperaturprofils unter Aufbringung eines spezifischen Drucks,
- Entstückung der Glasdurchführung aus der Graphit-Einschmelzform.

Aufgrund des Einglasens im Mehrzonen-Banddurchlaufofen oder Chargenofen kann der Schritt des Einglasens in einem Ofendurchlauf und somit mit geringem Zeit- und Kostenaufwand durchgeführt werden. Weiterhin besteht die Möglichkeit, einen breiten Bereich für die Prozesstemperatur und eine Schutzgasatmosphäre zu wählen

Ausführungsbeispiele der Erfindung werden im Folgenden anhand von Zeichnungen näher erläutert.

Dabei zeigen:
- Figur 1: eine perspektivische Darstellung einer Glasdurchführung mit einem einzelnen Innenteil,
- Figur 2: eine Schnittdarstellung eines Druckrings mit einer Verbindungsschicht,
- und Figur 3: eine schematische Darstellung des Arbeitsablaufes eines Verfahrens zur Herstellung der Glas-Titan-Dichtung.

Einander entsprechende Teile sind in allen Figuren mit den gleichen Bezugszeichen versehen.

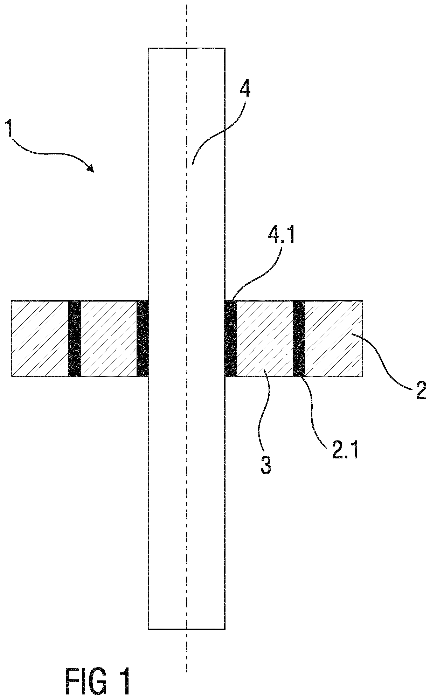

**Figur 1** zeigt eine Glasdurchführung 1, bei der ein einzelnes Innenteil 4 in einem Glaskörper 3 angeordnet ist, der sich in einem Druckring 2 befindet. Der Glaskörper 3 ist dabei sowohl mit dem Druckring 2 als auch mit dem Innenteil 4 stoffschlüssig verbunden. Zumindest der Druckring 2 ist aus einer Titan-Aluminium-Legierung gefertigt. Besonders geeignet hierzu ist die Legierung Ti 6A14V, die nach der ASTM-Systematik als Titan Grade 5 bezeichnet wird.

Die Innenseite des Druckrings 2 und das Innenteil 4 sind mit einer Verbindungsschicht 2.1 bzw. 4.1 aus Nickel versehen. Vorzugsweise ist die Verbindungsschicht 4.1 am Innenteil 4 auf den Bereich, der mit dem Glaskörper 3 verbunden ist, beschränkt.

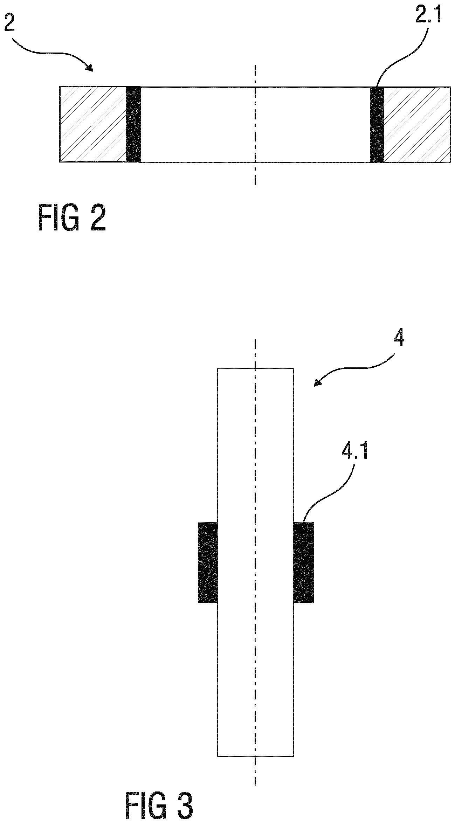

**Figur 2** zeigt den Druckring 2 in einer Schnittdarstellung. Auf der innen liegenden Wandfläche des Druckrings 2 ist die äußere Verbindungsschicht 2.1 aus Nickel aufgebracht, was vorzugsweise durch eine partielle galvanische Behandlung erfolgt.

In **Figur 3** ist das Innenteil 4 dargestellt. An diesem Teil ist der Bereich, der mit dem Glaskörper 3 verbunden wird, mit einer galvanisch aufgebrachten inneren Verbindungsschicht 4.1 aus Nickel versehen.

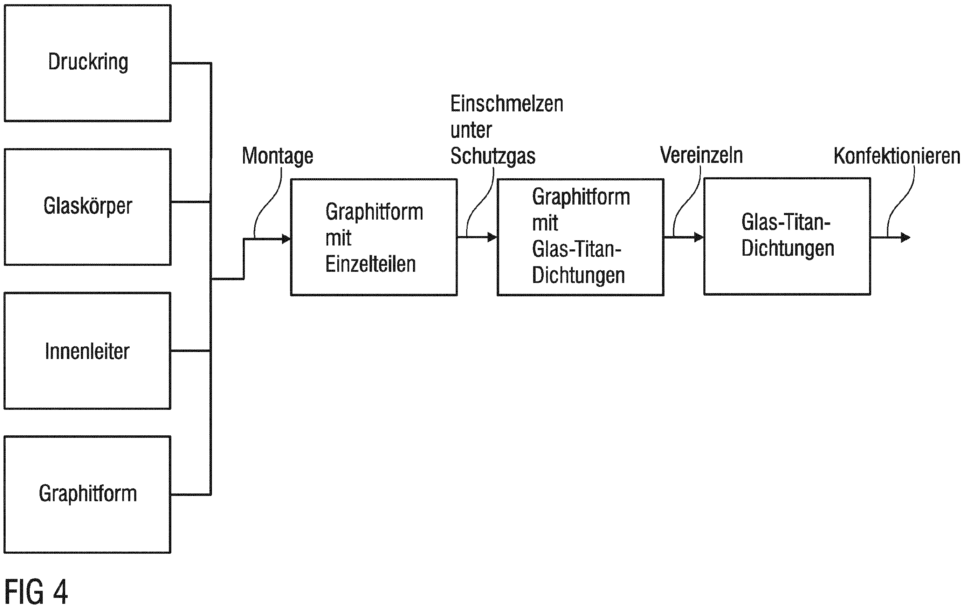

**Figur 4** zeigt als Blockschema die Verfahrensschritte zur Herstellung einer Glas-Titan-Dichtung.

Das Verfahren umfasst folgende Arbeitsschritte:
- Herstellung einer Sinterglas-Preform als Montageelement aus Einschmelzglas oder Glaslot,
- Präparation des Druckrings 2 und/oder des Innenteils 4 durch
   a. Reinigung und Oberflächenaktivierung,
   b. Partielle Beschichtung an den Einglasungsstellen,
   c. Tempern zur Schichtdiffusion,
- Montage des Druckrings 2 und des Innenteils 4 in eine Einglasungsform, vorzugsweise aus Graphit,
- Einglasen im Mehrzonen-Banddurchlaufofen oder Chargenofen unter Schutzgas bei Einhaltung eines definierten und reproduzierbaren Temperaturprofils unter Aufbringung eines spezifischen Drucks auf die Sinterglas-Preform
- Entstückung der Glasdurchführung aus der Graphit-Einschmelzform.

Im Anschluss an diese Verfahrensschritte kann eine anwendungsspezifische Konfektionierung durch partielle Vergoldungen, Bonden u. a. durchgeführt werden.

### BEZUGSZEICHENLISTE

- 1: Glas-Titan-Dichtung
- 2: Druckring
- 2.1: äußere Verbindungsschicht
- 3: Glaskörper
- 4: Innenteil
- 4.1: innere Verbindungsschicht

## Patentansprüche

1. Glas-Titan-Dichtung (1) mit einem Glaskörper (3), der außen mit einem Druckring (2) und innen mit zumindest einem Innenteil (4) stoffschlüssig verbunden ist, **dadurch gekennzeichnet, dass** zumindest der Druckring (2) aus Titan oder einer Titanlegierung besteht und zwischen dem Glaskörper (3) und dem Druckring (2) sowie zwischen dem Innenteil (4) und dem Glaskörper (3) jeweils eine Verbindungsschicht (2.1, 4.1) aus Nickel angebracht ist.

2. Glas-Titan-Dichtung (1) nach Anspruch 1, **dadurch gekennzeichnet, dass** das Innenteil (4) und/oder der Druckring (2) aus der Titan-Aluminium-Legierung Ti 6AL 4V besteht.

3. Verfahren zur Herstellung einer Glas-Titan-Dichtung (1) nach einem der Ansprüche 1 oder 2, wobei ein Glaskörper (3) an seiner Außenseite mit einem Druckring (2) und an seiner Innenseite mit zumindest einem Innenteil (4) stoffschlüssig verbunden wird, **dadurch gekennzeichnet, dass** zumindest auf einem Teilbereich der Oberfläche des aus Titan oder einer Titanlegierung bestehenden Druckrings (2) und auf der Oberfläche des Innenteils (4) eine Verbindungsschicht (2.1, 4.1) aus Nickel aufgebracht wird und danach der Glaskörper (3) mit dem Druckring (2) und dem Innenteil (4) durch Einschmelzen verbunden wird.

4. Verfahren nach Anspruch 3, **dadurch gekennzeichnet, dass** das Aufbringen der Verbindungsschicht (2.1, 4.1) auf die Teilbereiche des Innenteils (4) und/oder des Druckrings (2) galvanisch durchgeführt wird.

5. Verfahren nach Anspruch 3 oder 4, **dadurch gekennzeichnet, dass** folgende Verfahrensschritte ausgeführt werden:
- Herstellung einer Sinterglas-Preform als Montageelement aus Einschmelzglas oder Glaslot,
- Präparation des Druckrings (2) und/oder des Innenteils (4) durch
a) Reinigung und Oberflächenaktivierung,
b) Partielle Beschichtung an den Einglasungsstellen,
c) Tempern zur Schichtdiffusion,
- Montage des Druckrings (2) und des Innenteils (4) in die Graphit-Einschmelzform,
- Einglasen im Mehrzonen-Banddurchlaufofen oder Chargenofen unter Schutzgas bei Einhaltung eines definierten und reproduzierbaren Temperaturprofils unter Aufbringung eines spezifischen Drucks,
- Entstückung der Glasdurchführung aus der Graphit-Einschmelzform.
